# EUROPÄISCHE PATENTSCHRIFT

(11) **EP 1 008 809 B1**
(45) Veröffentlichungstag und Bekanntmachung des Hinweises auf die Patenterteilung: **23.04.2003**
(21) Anmeldenummer: 98123696.1
(22) Anmeldetag: 12.12.1998
(51) Int. Cl.: F24C 7/08, G05B 19/10

(54) **Steuergerät für Haushaltsgeräte, insbesondere Herde**
Control device for household appliances, in particular for ovens
Dispositif de commande d'appareils électroménagers, en particulier de fours

(43) Veröffentlichungstag der Anmeldung: 14.06.2000
(73) Patentinhaber: Siebe Appliance Controls GmbH, 67346 Speyer (DE)
(72) Erfinder: Anders, Klaus, 78559 Gosheim (DE)
(74) Vertreter: Vetter, Hans, Dipl.-Phys. Dr.

(56) Entgegenhaltungen:
- CH-A- 684 624
- US-A- 4 162 036
- US-A- 5 783 221
- PATENT ABSTRACTS OF JAPAN vol. 18, no. 239 (M-1601), 9. Mai 1994 & JP 06 026657 A (MATSUSHITA ELECTRIC IND CO), 4. Februar 1994
- PATENT ABSTRACTS OF JAPAN vol. 7, no. 1 (M-183), 6. Januar 1983 & JP 57 161427 A (MATSUSHITA DENKI SANGYO))

## Beschreibung

Die Erfindung betrifft ein Steuergerät für Haushaltsgeräte, insbesondere Herde, mit einer Display-Anordnung für Betriebsparameter, wie Zeit und Temperatur, und mit Bedienungselementen für Steuerfunktionen.

Derartige Steuergeräte sind beispielsweise in Form von Herdsteuerungen bzw. Herdschaltuhren in vielfachen Ausführungen bekannt und im Handel erhältlich. Als Steuerfunktionen sind dabei üblicherweise Zeitschaltfunktionen und manchmal auch Temperaturregel- oder -steuerfunktionen vorgesehen. Die jeweiligen Betriebsparameter, also beispielsweise die Zeit und die Temperatur, werden auf einem Display wiedergegeben.

In jedem Kulturkreis auf der Erde haben sich bestimmte Angewohnheiten bei der Wiedergabe derartiger Betriebsparameter gebildet. So wird die Zeitanzeige zum Teil im 12-Stunden-Zyklus und zum Teil um 24-Stunden-Zyklus angezeigt. Die Temperaturen werden zum Teil in °Celsius oder in °Fahrenheit angegeben. Da die Verbraucher großen Wert darauf legen, die Informationen in der ihnen gewohnten Weise zu erhalten, sind die Hersteller gezwungen, länderspezifische Steuergeräte beibeispielsweise für Herde, Kühlschränke, Waschmaschinen od. dgl. In vielen Kombinationen herzustellen und anzubieten. Bei einer Vielzahl von angebotenen Wiedergabeinformationen ist es dennoch kaum möglich, die dem jeweiligen Verbraucher liebste Kombination anzubieten.

Aus der US-A-4162036 ist ein zeitgesteuerter Thermostat bekannt, der mit einer Umschalteinrichtung zur Umschaltung der Temperaturanzeige in Celsius und in Fahrenheit versehen ist. Hierzu ist ein Umschalter vorgesehen. Der Nachteil dieser Lösung besteht darin, dass bei mehreren verschiedenartigen Umschalterfordernissen eine Vielzahl von Schaltern erforderlich sind, die die Anordnung unübersichtlich und teuer machen.

Es ist daher die Aufgabe der Erfindung, ein Steuergerät für Haushaltsgeräte zu schaffen, dessen Anzeigefunktionen der Anwender oder Endkunde nach seiner Vorstellung in einfacher Weise konfigurieren kann.

Diese Aufgabe wird erfindungsgemäß dadurch gelöst, dass durch Einschalten der Betriebsspannung auslösbare Mittel zur Display-Wiedergabe von mehreren alternativ auswählbaren Anzeigearten für wenigstens einen Betriebsparameter und/oder den Display-Betrieb vorgesehen sind, und dass wenigstens eines der Bedienungselemente neben seiner Steuerfunktion im Steuermodus in diesem Auswahlmodus eine Auswahlfunktion zum Auswählen unter den auf der Display-Anordnung wiedergegebenen Anzeigearten und zur entsprechenden festen Vorgabe der ausgewählten Anzeigeart für den weiteren Betrieb aufweist.

Das erfindungsgemäße Steuergerät hat zum einen den Vorteil, dass das Konfigurieren der Anzeigearten sehr schnell und einfach über die Bedienungselemente des Steuergeräts erfolgen kann und dass hierfür keine zusätzlichen Bedienungselemente benötigt werden, sondern vielmehr die für die Steuerfunktionen ohnehin vorhandenen Bedienungselemente hierzu verwendet werden können. Es können somit praktisch beliebig viele Anzeigearten konfiguriert werden, ohne dass die Zahl der relativ teuren Bedienungselemente dadurch ansteigt. Durch die Wiedergabe der Auswahlmöglichkeiten auf der ohnehin vorhandenen Display-Anordnung wird das Konfigurieren sehr einfach, so dass es der Endkunde selbst ohne Werkzeug durchführen kann.

Durch die in den Unteransprüchen aufgeführten Maßnahmen sind vorteilhafte Weiterbildungen und Verbesserungen des im Anspruch 1 angegebenen Steuergeräts möglich. Als Anzeigearten sind insbesondere unterschiedliche Einheiten, zum Beispiel °C und °F, für Betriebsparameter, wie die Temperatur, vorgesehen. Weiterhin können vorzugsweise als Anzeigearten ein 12-Stunden-Zyklus und ein 24-Stunden-Zyklus für die Zeitanzeige vorgesehen sein.

Darüber hinaus können als Anzeigearten auch unterschiedliche zeit- und/oder helligkeitsgesteuerte Display-Betriebsarten für die Display-Anordnung oder deren Anzeigeelemente vorgesehen sein.

Zur Wiedergabe von unterschiedlichen Anzeigearten zur Wahl eignen sich vorzugsweise entsprechende blinkende Symbole auf der Display-Anordnung, so daß leicht und sofort erkennbar ist, was zur Auswahl ansteht.

In vorteilhafter Weise kann der Auswahlmodus auch mehrere, nacheinander automatisch ablaufende Auswahlschritte aufweisen, wobei in jedem Auswahlschritt eine Auswahl zwischen wenigstens zwei Anzeigearten vorgesehen ist. Auf diese Weise kann eine praktisch beliebig ausführliche Konfiguruation vorgenommen werden, ohne daß zusätzliche Tasten oder Tastenfunktionen erforderlich wären. Zur Auswahl zwischen verschiedenen Anzeigearten ist in einer vorteilhaften ersten Ausgestaltung eine der Zahl von in einem Auswahlschritt auszuwählenden Anzeigearten entsprechende Anzahl von Bedienungselementen vorgesehen. In einer weiteren Ausgestaltung kann auch ein Drehknopf zur Auswahl zwischen den auswählbaren Anzeigearten vorgesehen sein, zum Beispiel dadurch, daß dieser Drehknopf zur Wahl der mehr auf der linken Seite wiedergegebenen Anzeigearten nach links und zur Wahl der mehr auf der rechten Seite wiedergegebenen Anzeigearten nach rechts gedreht wird.

Ein Ausführungsbeispiel der Erfindung ist in der Zeichnung dargestellt und in der nachfolgenden Beschreibung näher erläutert. Es zeigen:
- Fig. 1: eine Ansicht eines mit einem Display und sechs Bedienungselementen versehenen Steuergeräts für einen Herd und
- Fig. 2: ein Flußdiagramm zur Erläuterung der Wirkungsweise der Konfiguration.

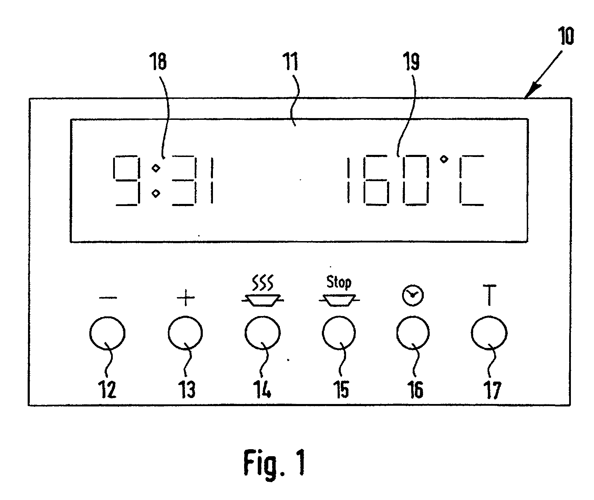

Das in Fig. 1 als Ausführungsbeispiel dargestellte Steuergerät 10 für einen Herd oder Backofen wird üblicherweise auch als Herdschaltuhr bezeichnet und besitzt ein Display 11 und sechs als Bedienungstasten 12 - 17 ausgebildete Bedienungselemente für Steuerfunktionen zum Betrieb des Herds oder Backofens. Die Erfindung ist jedoch nicht auf ein Steuergerät für Herde beschränkt, sondern es kann sich um ein Steuergerät für beliebige Haushaltsgeräte handeln, beispielsweise für Kühlschränke, Gefriertruhen, Waschmaschinen, Trockner od.dgl., bei denen Zeit- und/oder Temperaturfunktionen vorgesehen und wiederzugeben sind.

Beim Ausführungsbeispiel sind Zeit- und Temperaturfunktionen vorgesehen. Beispielsweise wird eine gewünschte Kochzeit dadurch vorgegeben, daß nach Betätigen der Bedienungstaste 14 die Kochzeit durch Betätigung der Bedienungstaste 13 eingestellt wird. Eine Reduzierung bzw. Korrektur der angezeigten Kochzeit nach unten kann dabei durch Betätigung der Bedienungstaste 12 und eine Erhöhung durch Betätigung der Bedienungstaste 13 erfolgen. Zur Vorgabe der Abschaltzeit oder des Kochendes im Automatikbetrieb wird die Bedienungstaste 15 betätigt, und danach wird wieder mittels der Tasten 12 und/oder 13 das Kochzeitende eingestellt. Durch Betätigung der Bedienungstaste 16 kann die aktuelle Uhrzeit wiederum mit Hilfe der Bedienungstasten 12 und 13 eingestellt werden. Diese Bedienungstaste 16 kann gleichzeitig zur Umschaltung zwischen Hand- und Automatikbetrieb dienen. Diese beschriebenen Zeitfunktionen sind bei bekannten Steuergeräten für Herde in gleicher oder ähnlicher Weise realisiert. Die jeweils einzustellenden oder eingestellten Zeiten erscheinen im Anzeigebereich 18 des Displays 11.

Zur Vorgabe der gewünschten Koch- oder Backtemperatur wird die Bedienungstaste 17 betätigt, wobei die genaue Einstellung der Temperatur dann wiederum mittels der Bedienungstasten 12 und 13 erfolgt. Die eingestellte Temperatur wird im Anzeigebereich 19 des Displays 11 wiedergegeben. Dabei kann entweder die eingestellte Solltemperatur oder die aktuelle Temperatur wiedergeben werden, wobei in bekannter Weise auch eine Umschaltung. zwischen diesen beiden Temperaturen mittels der Taste 17 bzw. zwischen den verschiedenen Zeiten durch Betätigung der Tasten 14 und 15 möglich ist.

Die Anordnung und Art der Bedienungstasten 12 - 17 können selbstverständlich auch variieren. Beispielsweise ist es möglich, die beiden Bedienungstasten 12 und 13 durch einen Drehknopf zu ersetzen, dessen Linksdrehung eine Reduzierung des jeweiligen Betriebsparameters und dessen Rechtsdrehung eine Erhöhung bewirkt. Die übrigen Bedienungstasten können auch vollständig oder zum Teil mittels eines Drehschalters realisiert sein.

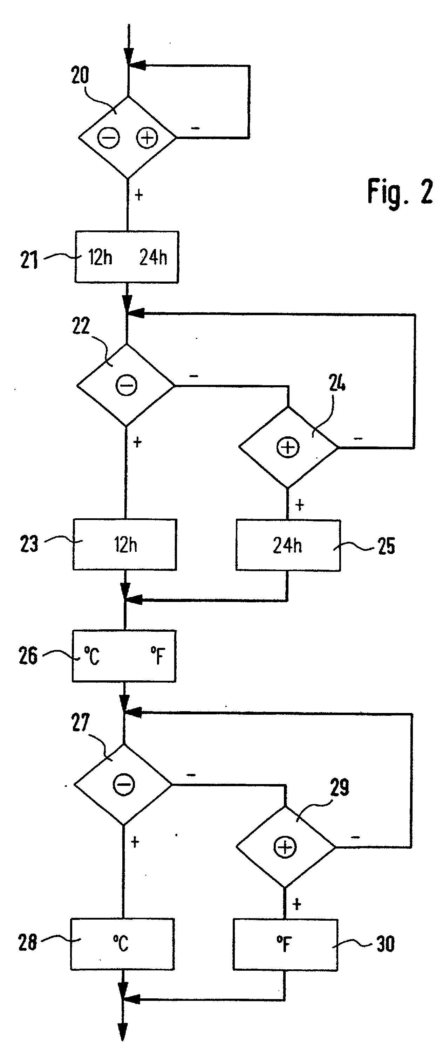

Eine Konfigurierung der Wiedergabe der Betriebsparameter Zeit und Temperatur wird im folgenden anhand des Flußdiagramms gemäß Fig. 2 erläutert. Werden gleichzeitig die Bedienungstasten 12 und 13 betätigt, so geht das Steuergerät 10, dessen Funktionen üblicherweise durch einen Mikrorechner realisiert werden, im Schritt 20 vom Steuermodus in den Auswahlmodus über. Die Bedienungstasten 12 und 13 besitzen somit eine Doppel- bzw. Mehrfachfunktion. Es ist selbstverständlich auch möglich, die Umschaltung in den Auswahlmodus durch Betätigung von zwei anderen Bedienungstasten, durch eine Mehrfachbetätigung einer bestimmten Bedienungstaste oder durch Betätigung einer Bedienungstaste während einer längeren Zeit von beispielsweise mehr als 5 Sekunden einzuleiten.

Eine alternative Möglichkeit, in den Auswahlmodus zu gelangen, besteht darin, diesen jeweils beim Einschalten der Betriebsspannung automatisch vorzugeben, wodurch sich eine Tastenbetätigung erübrigen würde. Um zu verhindern, daß bei einer derartigen Ausgestaltung nach jedem Stromausfall eine erneute Konfiguration erfolgen muß, könnte die jeweilige Konfiguration in einem nichtflüchtigen Speicher gespeichert werden, und wird nach Wiedereinschalten der Betriebsspannung automatisch wieder vorgegeben, wenn nicht innerhalb einer vorgebbaren Zeit von beispieslweise 10 Sekunden ein neuer Konfigurationsvorgang eingeleitet wird.

Nach der Einleitung des Auswahlmodus werden im Schritt 21 nun die Ziffern 12 und 24 blinkend im Anzeigebereich 18 des Displays 11 wiedergegeben, das heißt, die augenblickliche Uhrzeit wird durch die blinkende Anzeige 12 : 24 ersetzt. Zwischen diesen beiden Anzeigearten, also dem 12-Stunden-Zyklus und dem 24-Stunden-Zyklus für die Zeitanzeige, kann nun durch Betätigung einer der Bedienungstasten 12 und 13 gewählt werden. Dabei ist beispielsweise die linke Bedienungstaste 12 der linken Ziffer 12 und die rechte Bedienungstaste 13 der rechts daneben wiedergegebenen Ziffer 24 zugeordnet. Eine Betätigung der Bedienungstaste 12 im Schritt 22 führt somit im Schritt 23 zur Vorgabe des 12-Stunden-Zyklus, und eine Betätigung der Bedienungstaste 13 im Schritt 24 führt im Schritt 25 zur Vorgabe des 24-Stunden-Zyklus für die Zeitanzeige. Nun erlöschen die Ziffern 12 und 24, und es erscheinen durch den Schritt 26 die blinkenden Symbole C und F im Anzeigebereich 18. Nun erfolgt wiederum eine entsprechende Auswahl zwischen der Temperaturwiedergabe in °C und in °F mittels der Schritte 27-30, die prinzipiell den Schritten 22-25 entsprechen.

Der Auswahlmodus ist damit beendet, und das Auswahlprogramm geht wieder in den Normalbetrieb über.

Die Erfindung ist selbstverständlich nicht auf die Konfiguration der Anzeigearten für die Zeit und die Temperatur beschränkt. In einer einfacheren Ausführung kann auch nur einer dieser Betriebsparameter konfiguriert werden, während prinzipiell der Auswahlmodus auch erweitert werden kann. Zusätzlich konfiguriert werden kann beispielsweise auch der Display-Betrieb generell. Dies bedeutet beispielsweise, daß auch die Helligkeitssteuerung der Display-Wiedergabe gesteuert werden kann. Hier bestehen Auswahlmöglichkeiten zwischen einem dauernd hellen Betrieb oder einer Dunkel schaltung einige Zeit nach der letzten Aktion oder einer abgedunkelten Wiedergabe in Abhängigkeit von der Raumhelligkeit.

Anstelle der beschriebenen Auswahl zwischen zwei Anzeigearten bzw. Möglichkeiten kann beispielsweise auch eine Auswahl zwischen drei oder mehr Anzeigearten getroffen werden. In einem solchen Falle wird eine der Zahl der auswählbaren Anzeigearten entsprechende Zahl von Bedienungstasten dem Auswahlmodus zugeordnet.

Anstelle der Auswahl einer von zwei durch Symbole wiedergegebenen Anzeigearten durch zwei Bedienungstasten kann eine solche Auswahl auch mittels eines Drehknopfes erfolgen. Manche Herdschaltuhren besitzen anstelle der Bedienungstasten 12 und 13 zur Erhöhung und Erniedrigung des jeweiligen Parameters einen Drehknopf, dessen Linksdrehung zu einer Verringerung und dessen Rechtsdrehung zu einer Erhöhung des jeweiligen Parameters, insbesondere der Zeit, führt. Falls ein solcher Drehknopf vorgesehen ist, so kann er in der beschriebenen Weise zur Auswahl im Auswahlmodus verwendet werden.

Die Wiedergabe der alternativ anwählbaren Anzeigearten, z. B. 12h, 24h, °C, °F, muß nicht unbedingt im Anzeigebereich 18 für die Uhrzeit (im Steuermodus bzw. Normalbetrieb) erfolgen, sondern kann auch in Anzeigebereichen für andere Betriebsparameter oder in eigenen Bereichen oder gemischt erfolgen.

## Patentansprüche

1. Steuergerät für Haushaltsgeräte, insbesondere Herde, mit einer Display-Anordnung für Betriebsparameter und mit Bedienungselementen für Steuerfunktionen, **dadurch gekennzeichnet, dass** durch Einschalten der Betriebsspannung auslösbare Mittel zur Display-Wiedergabe von mehreren alternativ auswählbaren Anzeigearten (12h, 24h, °C, °F) für wenigstens einen Betriebsparameter (t, T) und/oder den Display-Betrieb vorgesehen sind, und dass wenigstens eines der Bedienungselemente (12, 13) neben seiner Steuerfunktion im Steuermodus in diesem Auswahlmodus eine Auswahlfunktion zum Auswählen unter den auf der Display-Anordnung (11) wiedergegebenen Anzeigenarten (12h, 24h, °C, °F) und zur entsprechenden festen Vorgabe der ausgewählten Anzeigeart für den weiteren Betrieb aufweist.

2. Steuergerät nach Anspruch 1, **dadurch gekennzeichnet, dass** unterschiedliche Einheiten (°C, °F) für Betriebsparameter, wie die Temperatur (T), als Anzeigearten vorgesehen sind.

3. Steuergerät nach Anspruch 1 oder 2, **dadurch gekennzeichnet, dass** ein 12-Stunden-Zyklus und ein 24-Stunden-Zyklus für die Zeitanzeige (t) als Anzeigenarten vorgesehen sind.

4. Steuergerät nach einem der vorhergehenden Ansprüche, **dadurch gekennzeichnet, dass** unterschiedliche zeit- und/oder helligkeitsgesteuerte Display-Betriebsarten für die Display-Anordnung (11) oder deren Anzeigeelemente als Anzeigearten vorgesehen sind.

5. Steuergerät nach einem der vorhergehenden Ansprüche, da**dadurch gekennzeichnet, dass** zur Wiedergabe von unterschiedlichen Anzeigearten (12h, 24h, °C, °F) entsprechende blinkende Symbole (12, 24, C, F) auf der Display-Anordnung (11) vorgesehen sind.

6. Steuergerät nach einem der vorhergehenden Ansprüche, **dadurch gekennzeichnet, dass** der Auswahlmodus mehrere, nacheinander automatisch ablaufende Auswahlschritte aufweist, wobei in jedem Auswahlschritt eine Auswahl zwischen wenigstens zwei Anzeigearten vorgesehen ist.

7. Steuergerät nach einem der vorhergehenden Ansprüche, da**dadurch gekennzeichnet, dass** eine der Zahl von in einem Auswahlschritt auszuwählenden Anzeigearten entsprechende Zahl von Bedienungselementen (12, 13) zur Auswahl der zugeordneten Anzeigearten vorgesehen ist.

8. Steuergerät nach einem der Ansprüche 1 bis 6, **dadurch gekennzeichnet, dass** ein Drehknopf zur Auswahl zwischen den auswählbaren Anzeigearten vorgesehen ist.

9. Steuergerät nach einem der vorhergehenden Ansprüche, **dadurch gekennzeichnet, dass** die Display-Wiedergabe von alternativ auswählbaren Anzeigearten (12h, 24h, °C, °F) im Auswahlmodus an der zur Wiedergabe eines Betriebsparameters im Steuermodus vorgesehenen Stelle erfolgt, insbesondere des Betriebsparameters Uhrzeit.

10. Steuergerät nach einem der Ansprüche 1 bis 8, **dadurch gekennzeichnet, dass** die Display-Wiedergabe von alternativ auswählbaren Anzeigearten (12h, 24h, °C, °F) im Auswahlmodus an einem eigens dafür vorgesehenen Bereich der Display-Anordnung (11) erfolgt.

## Claims

1. Control unit for domestic appliances, in particular cookers, with a display arrangement for operating parameters and with controls for control functions, **characterised in that** means for the display reproduction of several alternatively selectable indicating modes (12h, 24h, °C, °F) triggered by connecting the operating voltage are provided for at least one operating parameter (t, T) and/or for display operation, and **in that** at least one of the controls (12, 13) has, in addition to its control function in the control mode, in its selection mode a selection function for the selection of the indicating modes (12h, 24h, °C, °F) reproduced on the display arrangement (11) and for pre-setting the selected indicating mode for further operation.

2. Control unit according to claim 1, **characterised in that** different units (°C, °F) are provided as indicating modes for operating parameters such as temperature (T).

3. Control unit according to claim 1 or 2, **characterised in that** a 12 hour cycle and a 24 hour cycle are provided as indicating modes for time display (t).

4. Control unit according to any of the preceding claims, **characterised in that** different time- and/or brightness-controlled display modes are provided as indicating modes for the display arrangement (11) or its indicating elements.

5. Control unit according to any of the preceding claims, **characterised in that** flashing symbols (12, 24, C, F) for the reproduction of different indicating modes (12h, 24h, °C, °F) are provided on the display arrangement (11).

6. Control unit according to any of the preceding claims, **characterised in that** the selection mode includes several selection steps following one another automatically, each selection step involving a selection between at least two indicating modes.

7. Control unit according to any of the preceding claims, **characterised in that** the number of controls (12, 13) provided for the selection of the associated indicating modes corresponds to the number of the indicating modes to be selected in a selection step.

8. Control unit according to any of claims 1 to 6, **characterised in that** a rotary knob is provided for selecting between the selectable indicating modes.

9. Control unit according to any of the preceding claims, **characterised in that** the display reproduction of alternatively selectable indicating modes (12h, 24h, °C, °F) in the selection mode is effected at the point provided in the control mode for the reproduction of an operating parameter, in particular of the time parameter.

10. Control unit according to any of claims 1 to 8, **characterised in that** the display reproduction of alternatively selectable indicating modes (12h, 24h, °C, °F) in the selection mode is effected in an area of the display arrangement (11) specifically provided for this purpose.

## Revendications

1. Appareil de commande pour l'équipement ménager, en particulier les cuisinières, avec un afficheur pour les paramètres de fonctionnement et avec des éléments de service pour les fonctions de commande, **caractérisé en ce que** des moyens sont prévus, pouvant être déclenchés à la connexion de la tension de fonctionnement, afin de restituer la visualisation de plusieurs types d'affichage (12h, 24h, °C, °F) pour au moins un paramètre de fonctionnement (t, T) et/ou le fonctionnement de la visualisation, et qu'au moins un des éléments de service (12, 13) comprend, en plus de sa fonction de commande en mode commande, une fonction de sélection en mode sélection pour choisir parmi les types d'affichage (12h, 24h, °C, °F) restitués sur l'afficheur (11) et la pré-définition fixe correspondante du type d'affichage sélectionné pour la suite du fonctionnement.

2. Appareil de commande selon la revendication 1, **caractérisé en ce que** différentes unités (°C, °F) sont prévues en tant que types d'affichage pour les paramètres de fonctionnement comme la température (T).

3. Appareil de commande selon la revendication 1 ou 2, **caractérisé en ce qu'**un cycle de 12 heures et un cycle de 24 heures sont prévus en tant que types d'affichage pour indiquer le temps (t).

4. Appareil de commande selon l'une quelconque des revendications précédentes, **caractérisé en ce que** différents types de fonctionnement de la visualisation commandés par le temps et/ou la luminosité sont prévus pour l'afficheur (11) ou ses éléments en tant que types d'affichage.

5. Appareil de commande selon l'une quelconque des revendications précédentes, **caractérisé en ce que**, pour la restitution des différents types d'affichage (12h, 24h, °C, °F), des symboles clignotants correspondants (12, 24, C, F) sont prévus sur l'afficheur (11).

6. Appareil de commande selon l'une quelconque des revendications précédentes, **caractérisé en ce que** le mode sélection comprend plusieurs étapes de sélection s'enchaînant automatiquement l'une après l'autre, moyennant quoi, lors de chaque étape de sélection, un choix est prévu entre au moins deux types d'affichage.

7. Appareil de commande selon l'une quelconque des revendications précédentes, **caractérisé en ce qu'**un numéro des éléments de service (12, 13) correspondant au numéro des types d'affichage à sélectionner dans une étape de sélection est prévu pour la sélection des modes d'affichage attribués.

8. Appareil de commande selon l'une quelconque des revendications 1 à 6, **caractérisé en ce qu'**un bouton tournant est prévu pour la sélection parmi les types d'affichage pouvant être choisis.

9. Appareil de commande selon l'une quelconque des revendications précédentes, **caractérisé en ce que** la restitution de l'affichage des types d'affichage à sélectionner comme alternatives (12h, 24h, °C, °F) en mode sélection s'ensuit à la place prévue pour la restitution d'un paramètre de fonctionnement en mode commande, en particulier dans le cas du paramètre de fonctionnement "Heure".

10. Appareil de commande selon l'une quelconque des revendications 1 à 8, **caractérisé en ce que** la restitution de l'affichage des types d'affichage à sélectionner comme alternatives (12h, 24h, °C, °F) en mode sélection s'ensuit dans une zone particulière de l'afficheur (11) prévue à cet effet.
